(19) **Europäisches Patentamt European Patent Office Office européen des brevets**

(11) **EP 1 865 370 A1**

(12) # EUROPÄISCHE PATENTANMELDUNG
veröffentlicht nach Art. 158 Abs. 3 EPÜ

(43) Veröffentlichungstag:
**12.12.2007 Patentblatt 2007/50**

(51) Int Cl.:
***G02F 1/135*** (2006.01)

(21) Anmeldenummer: 05822307.4

(22) Anmeldetag: **23.11.2005**

(86) Internationale Anmeldenummer:
**PCT/RU2005/000593**

(87) Internationale Veröffentlichungsnummer:
**WO 2006/062442 (15.06.2006 Gazette 2006/24)**

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.11.2004 RU 2004134536**

(71) Anmelder:
• **Tzvetkov, Valentin Alekseyevich**
  **Moskovskaya obl. 141700 (RU)**
• **Tzvetkov, Oleg Valentinovich**
  **Moskovskaya obl., 141120 (RU)**

(72) Erfinder:
• **Tzvetkov, Valentin Alekseyevich**
  **Moskovskaya obl. 141700 (RU)**
• **Tzvetkov, Oleg Valentinovich**
  **Moskovskaya obl., 141120 (RU)**

(74) Vertreter: **Jeck, Anton**
**Jeck - Fleck - Hermann**
**Klingengasse 2/1**
**71657 Vaihingen/Enz (DE)**

(54) **FLÜSSIGKRISTALLANZEIGE ELEMENT**

(57) Die Erfindung bezieht sich auf ein Element eines Flüssigkristall-Displays mit einer Eingangsmaske mit Spalten, einem Raster-Linsenkondensator sowie einer zwischen zwei transparenten Trägern eingebetteten Schicht des Flüssigkristalls. Die Träger sind mit transparenten Elektroden und Orientierungsschichten versehen, einem Raster-Linsenobjektiv, einer Ausgangsmaske mit Spalten, deren Lage mit der Lage der Spalten der Eingangsmaske abgestimmt ist. Die Fläche des Elements ist in drei Teilbereiche derart aufgeteilt, dass eine Phasen-Beugungsstruktur in der Schicht des Flüssigkristalls möglich ist. Die Orientierungsschichten sind **dadurch gekennzeichnet, dass** sie aus einem Fotopolymer bestehen und dass die Phasen-Beugungsstruktur durch die Bereiche des Flüssigkristalls mit unterschiedlicher Ausgangsorientierung gebildet ist, die durch eine unterschiedliche Richtung der Polarisationsebene bei der Belichtung des Fotopolymers bedingt ist. Die Periode der Bereiche mit verschiedener Orientierung ist in jedem der Teilbereiche gleich und die gegenseitige Spaltenlage der Ausgangsmaske ist bezüglich der Spalten der Eingangsmaske innerhalb jedes Teilbereichs unterschiedlich, wobei der Durchlass einer in jedem Teilbereich unterschiedlichen Farbe von drei primären Farben innerhalb jedes Teilbereichs gewährleistet ist.

**Fig. 1**

**Beschreibung**

Die Erfindung betrifft die Anzeigetechnik, insbesondere Flüssigkristall-Farbdisplays, in denen die Farbenselektion von in der Fläche verbreiteten Farbfiltern mit drei primären Farben (Triade) durchgeführt wird und die Intensitätsmodulation jeder Farbe mittels des Flüssigkristalls (LC) erfolgt.

Aus der WO 85/04962 ist ein Element eines LC-Displays bekannt, das eine LC-Schicht enthält, die zwischen zwei Trägern mit transparenten Elektroden und Polarisationsfiltern auf den Außenseiten angeordnet ist. Eine der transparenten Elektroden ist auf einen Träger aufgebracht. Auf den zweiten Träger wird zunächst eine Triade aus Farbfiltern aufgebracht, auf denen eine Ausgleichsschicht aus einem Polymer aufgebracht wird, und auf die Ausgleichsschicht ist die transparente Elektrode aufgebracht. Auf den beiden transparenten Elektroden sind Schichten aufgebracht, die die Flüssigkristalle auf eine bestimmte Weise ausrichten.

Die Farbfilter der Triade sind aus einem Polymer hergestellt, und in jedem der Farbfilter der Triade ist der Farbstoff einer der primären Farben eingebracht. Gegenüber jedem Farbfilter ist ein Bereich des Flüssigkristalls angeordnet, der mit Hilfe von Polarisationsfiltern bei einer Spannungsanlegung die Menge des durch jeden der Farbfilter durchgehenden Lichts regelt. Die Vermischung der primären Farben in bestimmten Verhältnissen ermöglicht, eine Vollfarbdarstellung zu schaffen.

Die Nachteile des bekannten Displays sind eine nur geringe Lichtstärke (der größte Lichtanteil wird durch die Polarisationsfilter und den Farbfilter absorbiert) und ein hoher Preis, der durch die Schwierigkeiten bei der technologischen Herstellung bedingt ist: auf die Glasträger müssen Farbfilter aus einem Schmelzpolymer, Ausgleichsschichten ebenso aus einem Schmelzpolymer und transparente Elektroden aufgebracht werden. Das Aufbringen der transparenten Elektroden erfolgt üblicherweise mittels eines Hochtemperaturverfahrens, wobei die Elektroden mit den früher aufgebrachten Schmelzschichten schlecht verträglich sind. Die Haltbarkeit des Elements ist beschränkt, da der LC mit dem Polymer der Ausgleichsschicht und/oder mit dem Farbfilter chemisch reagieren kann. Dies kann zu seinem Leistungsabfall und dem Verlust der Arbeitsfähigkeit führen.

Das dem technischen Wesen und der erzielten Wirkung am nächsten kommende Element ist ein durch das Patent Ru 2 202 817 bekanntes Element, das eine Eingangsmaske mit Spalten, einen Raster-Linsenkondensor, eine zwischen zwei transparenten Trägern eingebettete LC-Schicht, wobei diese Träger mit transparenten Elektroden und Orientierungsschichten versehen sind, ein Raster-Linsenobjektiv und eine Ausgangsmaske mit Spalten aufweist, deren Lage mit der Spaltenlage der Eingangsmaske abgestimmt ist. Die Fläche des Elements ist in drei Teilbereiche bedingt geteilt, in denen es jeweils möglich ist, eine Phasen-Beugungsstruktur in der LC-Schicht zu bilden. Die Phasen-Beugungsstruktur in der LC-Schicht wird durch Anlegen einer Steuerspannung an die transparenten Elektroden erreicht, wobei in einer der Elektroden Fenster mit bestimmter Breite und Periode fotolithografisch geätzt sind. Bei der angelegten Spannung behält der Flüssigkristall im Bereich der geätzten Fenster die Ausgangsorientierung bei und wird in den übrigen Bereichen umorientiert. Das System der umorientierten Bereiche und Bereiche mit der Ausgangsorientierung arbeitet als steuerbares Phasen-Beugungsgitter, das das Licht in ein System von Beugungsordnungen zerlegt. Bei einer Beleuchtung des Phasen-Beugungsgitters mit dem durch den Raster-Linsenkondensor in der Fokalebene des Raster-Linsenobjektivs erzeugten Parallellichtbündels wird ein System von Beugungsmaxima der Ordnung 0, ±1, ±2 usw. gebildet. Die Spalten der Ausgangsmaske sind derart angeordnet, dass sie in jedem Teilbereich nur das Licht einer bestimmten Wellenlänge, eine der drei primären Farben, durchlassen.

Die Beugungsgitter nach Anspruch 1 haben die gleiche Periode d innerhalb jedes Teilbereichs oder eine unterschiedliche Periode (d, 1,2d und 1,5d) innerhalb jedes Teilbereichs nach Anspruch 2. Im ersten Fall ist die gegenseitige Spaltenlage der Ausgangsmaske bezüglich der Spalten der Eingangsmaske innerhalb jedes Teilbereichs verschieden, wobei der Durchlass einer für jeden Teilbereich unterschiedlichen Farbe der drei verschiedenen Farben innerhalb jedes Teilbereichs gewährleistet wird. Im zweiten Fall ist die gegenseitige Spaltenlage der Ausgangsmaske bezüglich der Spalten der Eingangsmaske innerhalb jedes Teilbereichs gleich, wobei der Durchlass einer für jeden Teilbereich unterschiedlichen Farbe von drei verschiedenen Farben innerhalb jedes Teilbereichs ebenso gewährleistet wird.

Aufgrund dieses Aufbaus können innerhalb eines Elements in der LC-Schicht drei unabhängige Phasengitter mit einer identischen Periode (nach Anspruch 1) oder mit drei verschiedenen Perioden (nach Anspruch 2) gebildet werden und mit Hilfe des Systems der Ein- und Ausgangsspalten und Raster drei voneinander unabhängige Farben ausgegliedert werden, die zulassen, eine volle Skala der unabhängigen, primären Farben zu erzeugen. Der Lichtverlust in einem solchen Element ist um mindestens 50% geringer als im bekannten Element. Außerdem verfügt das Element über gute Winkelkenndaten und einen hohen Kontrast.

Der Nachteil der bekannten, technischen Lösung ist ein kompliziertes Herstellungsverfahren, das durch die benötigte, feine Fotolithografie auf der transparenten Elektrode bedingt ist (die Periode der geätzten Fenster und des Beugungsgitters innerhalb jedes Elementes beträgt 3-10 μm). Die Ausbeute ist nicht hoch, deswegen sind die Herstellkosten hoch.

Das Ziel der vorliegenden Erfindung ist die Senkung der Herstellkosten unter Beibehalten der Betriebsparameter wie beim Prototyp.

Das gestellte Ziel wird dadurch erreicht, dass im Element, das eine Eingangsmaske mit Spalten, einen Raster-Linsenkondensor; eine zwischen zwei transparenten Trägern eingebettete Schicht des Flüssigkristalls, wobei die Träger mit transparenten Elektroden und Orientierungsschichten versehen sind, ein Raster-Linsenobjektiv und eine Ausgangsmaske mit Spalten aufweist, deren Lage mit der Lage der Spalten der Eingangsmaske abgestimmt ist, die Fläche des Elements in drei Teilbereiche bedingt aufgeteilt ist und es innerhalb jedes Teilbereichs möglich ist, eine Phasen-Beugungsstruktur in der Schicht des Flüssigkristalls dadurch zu bilden, dass die Orientierungsschichten aus einem Fotopolymer gebildet sind und die Phasen-Beugungsstruktur aus Bereichen des Flüssigkristalls mit unterschiedlicher Ausgangsorientierung gebildet ist, die durch die unterschiedliche Richtung der Polarisationsfläche bei der Belichtung des Fotopolymers bedingt ist. Die Periode der Bereiche mit unterschiedlicher Orientierung (d) ist in jedem Teilbereich identisch (nach Anspruch 1). Die gegenseitige Spaltenlage der Ausgangsmäske bezüglich der Spalten der Eingangsmaske innerhalb jedes Teilbereichs ist unterschiedlich, wobei der Durchlass einer für jeden Teilbereich unterschiedlichen Farbe von drei primären Farben innerhalb jedes Teilbereichs gewährleistet wird.

Nach Anspruch 2 ist die Periode der Bereiche mit verschiedener Orientierung in jedem Teilbereich (d, 1,2d und 1,5d) unterschiedlich.

Im ersten Fall ist die gegenseitige Spaltenlage der Ausgangsmaske bezüglich der Spalten der Eingangsmaske innerhalb jedes Teilbereichs unterschiedlich, wobei der Durchlass einer in jedem Teilbereich unterschiedlichen Farbe von drei primären Farben innerhalb jedes Teilbereichs gewährleistet ist.

Im zweiten Fall ist die gegenseitige Spaltenlage der Ausgangsmaske bezüglich der Spalten der Eingangsmaske innerhalb jedes Teilbereichs gleich, wobei der Durchlass einer in jedem Teilbereich unterschiedlichen Farbe von drei primären Farben innerhalb jedes Teilbereichs gewährleistet ist.

Beim Element gemäß der Erfindung erübrigt sich die Notwendigkeit, kostspielige, feine Fotolithografie auf der transparenten Elektrode durchzuführen, wodurch die Produktion der Bildschirme unter Beibehalten aller guten Betriebsparameter des Prototyps wesentlich verbilligt wird.

Ein Ausführungsbeispiel der Erfindung ist in der Zeichnung schematisch dargestellt. Es zeigen:

Fig. 1    ein Querschnitt durch das Element gemäß der Erfindung der Aufbau des Elementes und den Strahlenweg in diesem Element,

Fig. 2    die Lage von Bereichen mit unterschiedlicher Orientierung auf der Fläche des Elements der Fig. 1 nach Anspruch 1 und

Fig. 3    die Lage der Bereiche mit unterschiedlicher Orientierung auf der Fläche des Elements der Fig. 1 nach Anspruch 2.

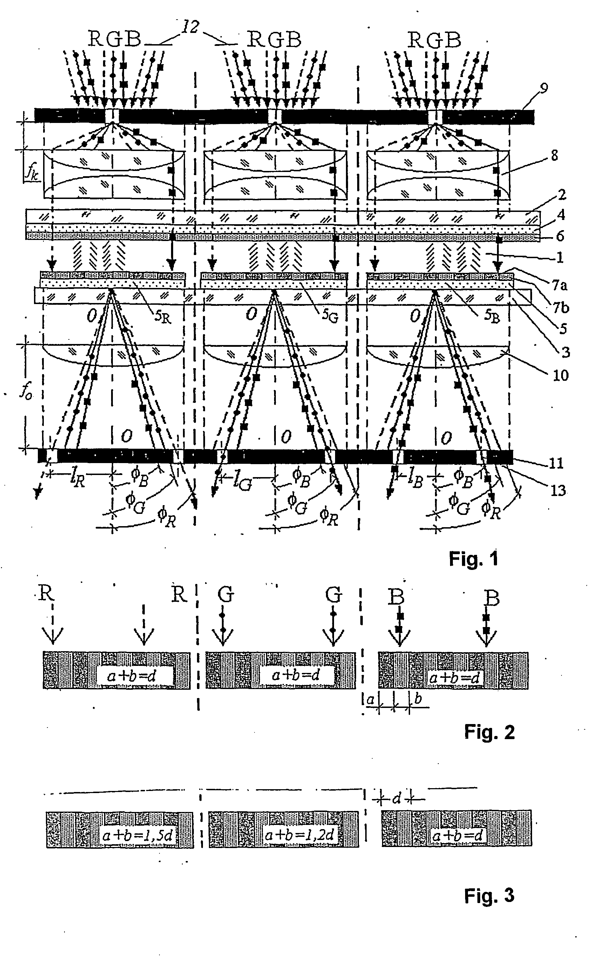

Das in Fig. 1 dargestellte Element des Flüssigkristall-Displays umfasst eine Schicht 1 des Flüssigkristalls, die zwischen zwei transparenten Trägern 2 und 3 angeordnet ist. Auf die Innenseiten der Träger 2, 3 sind transparente Elektroden 4 und 5 aufgebracht. Auf die Innenseiten der transparenten Elektroden 4, 5 sind Orientierungsschichten 6 und 7 aufgebracht, die aus einem Fotopolymer hergestellt sind, das bei der Beleuchtung mit einer polarisierten UV-Strahlung die Moleküle des LC entlang der Richtung der Polarisationsebene orientieren kann.

Die Elektrode 4 ist innerhalb des Elements vollflächig ausgeführt, und die Elektrode 5 ist in drei Segmente aufgeteilt: $5_R$, $5_G$, $5_B$. Die Elektrode 4 und die Segmente der Elektrode 5 weisen keine Fenster auf, die im Prototyp mittels Fotolithografie geätzt sind und eine Beugungsstruktur bilden.

Die Beugungsstruktur ist innerhalb des Elements durch die Bereiche in Form von Streifen auf dem Fotopolymer ausgebildet. Dazu wird das Fotopolymer 6 vor der Montage des Elements auf einem Träger mit der Richtung der Polarisationsebene belichtet, beispielsweise horizontal und in der Ebene der Zeichnung. Ein Fotopolymer 7 auf dem zweiten Träger wird durch zwei Masken nacheinander belichtet, von denen die eine Spalte mit der Breite a und die zweite Spalten mit der Breite b aufweist. Bei der ersten Belichtung ist die Richtung der Polarisationsebene zur Ebene der Zeichnung senkrecht. Bei der zweiten Belichtung ist die Richtung der Polarisationsebene horizontal und in der Ebene der Zeichnung. Als Ergebnis werden in der LC-Schicht Bereiche mit unterschiedlicher Ausgangsorientierung gebildet. Gegenüber Bereichen 7a wird eine Planartextur mit der Richtung der langen Achsen der Moleküle senkrecht zur Ebene der Zeichnung, und gegenüber Bereichen 7b wird eine um 90° gedrehte Twiststruktur gebildet. Das abwechselnde System der Bereiche a und b mit unterschiedlicher Ausgangsorientierung stellt eine Phasen-Beugungsstruktur mit der Periode a + b = d dar. Diese Beugungsstruktur besteht dauernd bei fehlenden Steuerspannungen.

In einer ersten Variante ist die Periode der Beugungsstruktur in allen drei Teilbereichen R, G, B (Fig. 2) identisch. In einer zweiten Variante sind die Perioden der kammförmigen Strukturen in jedem von drei Teilbereichen unterschiedlich, beispielsweise d im Teilbereich B, 1,2d im Teilbereich G und 1,5d im Teilbereich R (Fig. 3).

Auf der Außenseite des Trägers 2 sind ein Raster-Linsenkondensor 8 und eine Eingangsmaske 9 mit Spalten angeordnet. Auf der Außenseite des Trägers 3 sind ein Raster-Linsenobjektiv 10 und eine Ausgangsmaske 11 angeordnet.

Die Strahlen von weißem, unpolarisiertem Licht 12 (axial und paraxial) beleuchten die Eingangsmaske 9, und die schmalen Lichtbündel laufen durch die Spalten der Eingangsmaske. Die Spalten der Eingangsmaske sind in den Brennpunkten des Rasters-Linsenkondensors 8 angeordnet; deshalb wird am Ausgang des Kondensors ein praktisch paralleles Lichtbündel erzeugt, das die Fläche des Elements gleichmäßig beleuchtet.

Das Raster-Linsenobjektiv 10 stellt die Lichtquelle (Spalten der Eingangsmaske 9) in seiner Fokalebene, d.h. auf der Ausgangsmaske 11, dar.

Die Spalten der Ausgangsmaske 13 sind in Abständen $I_R$, $I_G$, $I_B$ von den axialen Linien 00 angeordnet. In einer ersten Variante sind die Abstände $I_R$, $I_G$, $I_B$ unterschiedlich. In einer zweiten Variante sind die Abstände $I_R = I_G = I_B$. Die Formeln für die Berechnung dieser Abstände sind unten angegeben.

Für das System der primären Farben wird das System nach dem internationalen Standard CIE verwendet:

- blau B 0,440 $\mu$m,
- grün G 0,528 $\mu$m = (0,440 x 1,2) $\mu$m,
- rot R 0,660 $\mu$m = (0,440 x 1, 5) $\mu$m.

Das Licht, das durch das Phasenbeugungsgitter hindurchgegangen ist, bildet mit Hilfe des Raster-Linsenobjektivs 8 in der Ebene der Ausgangsmaske 9 ein System von Beugungsspektren der Ordnungen ±m.

Die Winkel bezüglich der axialen Richtungen (0-0), unter denen die bestimmten Wellenlängen betrachtet werden, werden durch die Formel

$$\sin \varphi = \pm m\ \lambda/2d \text{ bestimmt,}$$

in der $\varphi$ der Winkel, unter dem sich das Licht mit der Wellenlänge $\lambda$ verbreitet, m die Nummer des Beugungsmaximums (nimmt ganze Werte an) und d die Periode der Beugungsstruktur bedeutet.

Unter dem Winkel $\varphi_B$ in der Ebene der Ausgangsmaske 11 wird die blaue Farbe B, unter dem Winkel $\varphi_G$ die grüne Farbe G und unter dem Winkel $\varphi_R$ die rote Farbe R fokussiert.

Die Fokussierungsstellen jeder der Farben R, G, B sind in den Abständen $I_R$, $I_G$, $I_B$ von der axialen Linie 00 angeordnet. An diesen Stellen der Ausgangsmaske 11 sind durchsichtige Spaltenbereiche 13 vorgesehen, die das Licht nur in der vorgegebenen Welleläge durchlassen.

Im Ausgangszustand (Steuerspannungen sind nicht angelegt) bestehen in jedem der drei Teilbereiche die Phasen-Beugungsstrukturen. Die schmalen Strahlen des Weißlichts, die durch die Spalten der Eingangsmaske laufen, beleuchten die Phasen-Beugungsstrukturen mit einem praktisch parallelen Bündel mittels des Kondensors, und in der Fokalebene des Rasterobjektivs 10 wird ein System der Beugungsmaxima gebildet. Durch die Ausgangsspalten 13 in jedem Teilbereich läuft das Licht der bestimmten, spektralen Zusammensetzung. Als Ergebnis wird im Ausgangszustand durch Vermischung dreier primärer Farben ein erster optischer Zustand, nämlich "Weißlicht", gewonnen.

Wenn die Steuerspannungen gleichzeitig an die Elektrode 6 und die Elektrodensegmente $5_R$, $5_G$, $5_B$ angelegt werden, werden die LC-Moleküle entlang des Felds umorientiert; die LC-Schicht in allen drei Bereichen wird homogen, und die Phasen-Beugungsstrukturen verschwinden in allen drei Bereichen. In allen drei Bereichen wird das Licht sich in den Nullordnungen (auf den axialen Linien 00) konzentrieren und durch die undurchsichtige Maske absorbiert. Der zweite optische Zustand "Dunkel" wird gewonnen.

Wenn die Steuerspannung an die Elektrode 6 und an zwei beliebige Elektrodensegmente, beispielsweise an $5_R$ und $5_G$, angelegt wird, besteht die Beugungsstruktur nur im Bereich ($5_B$), an den die Spannung nicht angelegt ist, und es geht nur das Licht einer Wellenlänge hindurch, in diesem Fall die "Farbe 1" (blau B, das ist der dritte optische Zustand).

Indem das Anlegen der Spannung an die Elektrode 6 und an die Paare der Elektrodensegmente kombiniert wird, kann die "Farbe 2" (grün G) gewonnen werden, wenn die Spannung an die Segmente $5_R$ und $5_B$ angelegt wird. Die "Farbe 3" (rot R) kann gewonnen werden, wenn die Spannung an die Segmente $5_G$ und $5_B$ angelegt wird. Somit ergeben sich der vierte und der fünfte optische Zustand des Elements.

Die Intensität jeder der primären Farben kann vom Maximum (bei fehlender Steuerspannung im ausgewählten Bereich) bis praktisch Null (bei maximaler, angelegter Spannung, die die volle Umorientierung der LC-Moleküle gewährleistet) unabhängig moduliert werden. Möglich sind Zwischenwerte der Intensität bei Spannungen, die zur vollständigen Umorientierung der LC-Moleküle im gewählten Bereich und zur Zerstörung der Phasen-Beugungsstruktur, d.h. der Realisierung der Grauskala, nicht ausreichend sind.

Nach Anspruch 1 der vorliegenden Erfindung haben die Spalte in der Ausgangsmaske eine unterschiedliche Winkellage bezüglich der axialen Linie in jedem der drei Teilbereiche, aber eine identische Periode des Beugungsgitters. Dies ermöglicht, den Durchlass des Lichts nur einer Farbe in jedem der Teilbereiche zu gewährleisten.

Nach Anspruch 2 der vorliegenden Erfindung haben die Spalten der Ausgangsmaske eine identische Winkellage bezüglich der axialen Linie in jedem der drei Teilbereiche, aber eine unterschiedliche Periode des Beugungsgitters. In dieser Variante ist die Möglichkeit des Durchlasses des Lichts nur einer Farbe in jedem der Teilbereiche durch eine Verschiebung der Winkellage des Spektrums ebenso gewährleistet. Diese Verschiebung in der Richtung zur axialen Linie wird mit der Vergrößerung der Periode des Beugungsgitters 1,2 oder 1,5 gewährleistet.

Die Auswahl einer einzelnen Variante gewährt dem Hersteller eine große Freiheit bei der Auswahl entsprechend den technologischen Möglichkeiten des Herstellers.

Die spektrale Zusammensetzung des durch eine Spalte gelassenen Lichts wird durch die Lage der Spalte in der Ausgangsmaske bezüglich der axialen Linie, an der sich auch die Spalte der Eingangsmaske befindet, und durch die Breite der Spalte der Ausgangsmaske bestimmt.

Diese Parameter werden durch den Aufbau und unabhängig für jede der Farben vorgegeben und können nach Bedarf variiert werden. Wenn beispielsweise reinere Farben benötigt werden, soll die Spaltenbreite minimal sein. Dann wird die Intensität des durchgehenden Lichts auch minimal sein. Wenn eine größere Intensität gefordert wird und nicht ganz reine Farben zulässig sind, kann die Spaltenbreite bis 1/3 der Breite des ganzen Spektrums vergrößert werden. Es fehlt die Abhängigkeit der spektralen Zusammensetzung des durchgehenden Lichts von einigen Parametern des Flüssigkristalls, beispielsweise von der Schichtdicke, der Temperatur oder den Betrachtungswinkeln, und dies ist ein sehr wichtiger Betriebsparameter.

Daher werden im Element fünf optische Zustände realisiert: die "Farbe 1" (blau B), die "Farbe 2" (grün G), die "Farbe 3" (rot R) und die Zustände "Dunkel" und "Weißlicht", wodurch ermöglicht wird, ein Vollfarbsystem der Informationsdarstellung zu schaffen.

Jede der Farben kann unabhängig voneinander moduliert werden.

Somit sind alle Vorteile des Elements gemäß dem Prototyp erhalten geblieben, doch fehlt die arbeitsintensive und teure Fotolithografie auf der transparenten Elektrode. Aus demselben Grund ist die Ausbeute wesentlich höher.

Folglich ist die Technologie der Bildschirmherstellung einfacher und billiger, wodurch auch eins der Ziele der vorliegenden Erfindung erfüllt wird.

**Patentansprüche**

1. Element eines Flüssigkristall-Displays mit einer Eingangsmaske mit Spalten, einem Raster-Linsenkondensator, einer zwischen zwei transparenten Trägern eingebetteten Schicht des Flüssigkristalls, wobei die Träger mit transparenten Elektroden und Orientierungsschichten versehen sind, einem Raster-Linsenobjektiv, einer Ausgangsmaske mit Spalten, deren Lage mit der Lage der Spalten der Eingangsmaske abgestimmt ist, wobei die Fläche des Elements in drei Teilbereiche derart aufgeteilt ist, dass eine Phasen-Beugungsstruktur in der Schicht des Flüssigkristalls möglich ist,
**dadurch gekennzeichnet,**
**dass** die Orientierungsschichten aus einem Fotopolymer bestehen, dass die Phasen-Beugungsstruktur durch die Bereiche des Flüssigkristalls mit unterschiedlicher Ausgangsorientierung gebildet ist, die durch eine unterschiedliche Richtung der Polarisationsebene bei der Belichtung des Fotopolymers bedingt ist, dass die Periode der Bereiche mit verschiedener Orientierung in jedem der Teilbereiche gleich ist und dass die gegenseitige Spaltenlage der Ausgangsmaske bezüglich der Spalten der Eingangsmaske innerhalb jedes Teilbereichs unterschiedlich ist, wobei der Durchlass einer in jedem Teilbereich unterschiedlichen Farbe von drei primären Farben innerhalb jedes Teilbereichs gewährleistet ist.

2. Element nach Anspruch 1,
**dadurch gekennzeichnet,**
**dass** die Periode der Bereiche mit unterschiedlicher Orientierung in jedem der Teilbereiche, beispielsweise d, 1,2d und 1,5d, unterschiedlich ist, dass die gegenseitige Spaltenlage der Ausgangsmaske bezüglich der Spalten der Eingangsmaske innerhalb jedes Teilbereichs gleich ist und dass der Durchlass einer in jedem Teilbereich unterschiedlichen Farbe aus drei primären Farben innerhalb jedes Teilbereichs gewährleistet ist.

**Fig. 1**

**Fig. 2**

**Fig. 3**

# EP 1 865 370 A1

<table>
<tr><td colspan="2" style="text-align:center"><b>INTERNATIONAL SEARCH REPORT</b></td><td>International application No.<br>PCT/RU2005/000593</td></tr>
</table>

**A. CLASSIFICATION OF SUBJECT MATTER** *G02F 1/135 (2006.01)*

According to International Patent Classification (IPC) or to both national classification and IPC

**B. FIELDS SEARCHED**

Minimum documentation searched (classification system followed by classification symbols)

G02F 1/133, 1/13, 1/135, 1/1333

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | RU 2202817 C2 (TSVETKOV VALENTIN ALEXEEVICH et al) 20.04.2003 | 1-2 |
| A | RU 2196351 C2 (TSVETKOV VALENTIN ALEXEEVICH et al) 10.01.2003 | 1-2 |
| A | RU 2196349 C2 (TSVETKOV VALENTIN ALEXEEVICH et al) 10.01.2003 | 1-2 |
| A | US 4881797 A (HOSIDEN ELECTRONICS LTD.) 21.11.1989 | 1-2 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 March 2006 (28.03.2006) | 06 April 2006 (06.04.2006) |

| Name and mailing address of the ISA/ | Authorized officer |
|---|---|
| Facsimile No. | Telephone No. |

Form PCT/ISA/210 (second sheet) (July 1998)

7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 8504962 A